# EUROPÄISCHE PATENTSCHRIFT

(11) **EP 0 936 476 B1**
(45) Veröffentlichungstag und Bekanntmachung des Hinweises auf die Patenterteilung: **11.01.2006**
(21) Anmeldenummer: 99100635.4
(22) Anmeldetag: 14.01.1999
(51) Int. Cl.: G01S 15/93

(54) **Hinderniserkennungssystem in einem Kraftfahrzeug**
Vehicle-based obstacle recognition system
Système de reconnaissance d'obstacles pour véhicules

(30) Priorität: 11.02.1998 DE 19805515
(43) Veröffentlichungstag der Anmeldung: 18.08.1999
(73) Patentinhaber: Bayerische Motoren Werke Aktiengesellschaft, 80788 München (DE)
(72) Erfinder: Wagner, Armin, 85757 Karlsfeld (DE); Horst, Walter, 80801 München (DE)

(56) Entgegenhaltungen:
- DE-A- 4 303 815

## Beschreibung

Die Erfindung bezieht sich auf ein Hinderniserkennungssystem in einem Kraftfahrzeug nach dem Oberbegriff des Patentanspruchs 1.

Ein derartiges Hinderniserkennungssystem ist beispielsweise unter dem Begriff "Park Distance Control" (PDC) für BMW Fahrzeuge (vgl. Prospekt "Der BMW 5er Touring", Sonderausstattungen, 1995, Seite 10, Punkt 2) oder aus der DE 43 03 815 A bekannt. Dieses bekannte Hinderniserkennungssystem PDC weist ein elektronisches Steuergerät und Sensoren zur Erfassung des Abstandes eines Hindernisses in einem vorgegebenen Bereich auf. Derartige Sensoren können beispielsweise im Heckbereich aber auch im Frontbereich zur Erleichterung des Einparkens vorhanden sein. In dem bekannten Hinderniserkennungssystem PDC sind vier Sensoren in Form von Ultraschallsensoren zumindest in die hinteren Stoßfänger integriert, die beispielsweise automatisch beim Einlegen des Rückwärtsganges aktiviert werden können. Durch Warnimpulse mit sich änderndem Intervall wird der jeweils aktuelle Abstand zu einem Hindernis hinter dem eigenen Fahrzeug signalisiert. Der vorgegebene Bereich, in dem das Hinderniserkennungssystem arbeitet, ist insbesondere durch die keulenförmigen Erfassungsbereiche der Sensoren definiert.

Problematisch bei einem derartigen aktivierten Hinderniserkennungssystem (PDC) sind am Fahrzeug angebrachte Anbauteile, die möglicherweise im Erfassungsbereich der Sensoren liegen, und daher grundsätzlich als Hindernis erkannt werden könnten. Ein derartiges Anbauteil ist beispielsweise die Anhängerkupplung. Trägt die Anhängerkupplung einen Anhänger, der auch elektrisch mit dem Fahrzeug verbunden ist, kann über diese elektrische Verbindung ein Signal zur Unterdrückung des aktivierten Hinderniserkennungssystems ausgegeben werden.

Es ist Aufgabe der Erfindung, bei am Fahrzeug angebrachten Anbauteilen, wie insbesondere bei einer Anhängerkupplung auch ohne angeschlossenem Anhänger, einen Fehlalarm eines Hinderniserkennungssystems zu unterdrücken.

Diese Aufgabe wird durch die Merkmale des Patentanspruchs 1 gelöst.
Eine vorteilhafte Weiterbildung der Erfindung ist der Gegenstand des Patentanspruchs 2.

Erfindungswesentlich ist, daß das Steuergerät in einem definierten Teilbereich, in dem möglicherweise am Fahrzeug ein Anbauteil angebracht sein kann, das von einem Sensor als Hindernis erkannt werden könnte, im Falle einer tatsächlichen Hinderniserkennung in diesem Teilbereich in einem ersten Schritt den Abstand des Hindernisses vom eigenen Fahrzeug ermittelt. In einem zweiten Schritt überprüft das Steuergerät, z. B. bei einer Bewegung des Fahrzeuges oder nach einer vorgegebenen Zeit, ob sich dieser Abstand ändert. Der Erfindung liegt die Erkenntnis zugrunde, daß sich bei Anbauteilen als erkanntes Hindernis dessen Abstand bei einer Bewegung des Fahrzeuges nicht ändert, wogegen sich bei einer Bewegung des Fahrzeugs oder des Hindernisses der Abstand zu außerhalb des Fahrzeugs vorhandenen Hindernissen ändert. Durch diese Unterscheidbarkeit von erkannten Hindernissen wird beispielsweise ein Alarm des Hinderniserkennungssystems unterdrückt, wenn sich das erkannte "Hindernis" als Anbauteil herausstellt.

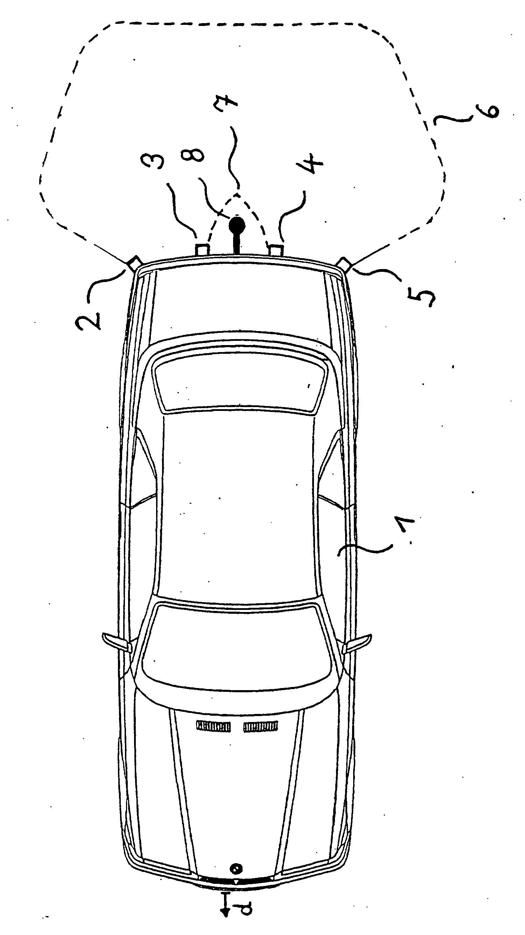

In der Zeichnung ist ein Ausführungsbeispiel der Erfindung dargestellt. Es zeigt ein Fahrzeug mit einem erfindungsgemäßen Hinderniserkennungssystem, an dem als Anbauteil eine Anhängerkupplung angebracht ist.

Ein Fahrzeug 1 weist zumindest am hinteren Stoßfänger vier Ultraschallsensoren 2 bis 5 auf, durch die in einem durch die keulenförmigen Erfassungsbereiche der Ultraschallsensoren 2 bis 5 definierten vorgegebenen Bereich 6 alle Hindernisse erkannt werden.

Im dargestellten Beispiel weist das Kraftfahrzeug 1 als Anbauteil eine Anhängerkupplung 8 auf. Diese Anhängerkupplung 8 liegt im Erfassungsbereich der Ultraschallsensoren 3 und 4.

In dem hier nicht dargestellten elektronischen Steuergerät des Kraftfahrzeuges 1 für das Hinderniserkennungssystem ist ein definierter Teilbereich 7 abgespeichert, in dem die Anhängerkupplung 8 liegt und erkannt werden könnte. Erkennt das Steuergerät, daß in dem definierten Teilbereich 7 ein Hindernis vorliegt, wird eine Bewegung des Kraftfahrzeuges, z. B. Vorwärts- oder Rückwärtsfahrt, abgewartet und nach Erkennung der Bewegung überprüft, ob sich der Abstand zu dem im definierten Teilbereich 7 zuvor erkannten Hindernis ändert. Bewegt sich beispielsweise das Fahrzeug 1 um eine Wegstrecke d nach vorne, müßte sich der Abstand um diese Wegstrekke d vergrößern, wenn sich das im definierten Teilbereich 7 erkannte Hindernis außerhalb des Kraftfahrzeugs befinden würde. Ändert sich dieser Abstand jedoch nicht, schließt das Hinderniserkennungssystem auf das Vorliegen einer Anhängerkupplung 8. In diesem Fall wird der Alarm, der bei Vorliegen eines außerhalb des Fahrzeuges vorhandenen Hindernisses ausgelöst werden würde, unterdrückt.

Vorzugsweise werden die vorgenannten erfindungsgemäßen Schritte nur dann ausgeführt, wenn im Steuergerät eine Information vorliegt, z. B. per Codierung oder per Datenbusinformation, die anzeigt, daß das Fahrzeug eine Anhängerkupplung besitzt. Ist eine derartige Information jedoch nicht vorgesehen, werden die erfindungsgemäßen Schritte in jedem Fall durchgeführt.

Ergänzend wird darauf hingewiesen, daß im genannten Ausführungsbeispiel bei Vorliegen einer Anhängerkupplung 8 ausgehend vom Stillstand des Fahrzeuges unterschieden werden kann, ob sich das Fahrzeug vorwärts oder rückwärts bewegt. Wird das Fahrzeug ausgehend vom Stillstand vorwärts bewegt, wird nach dem erfindungsgemäßen Hinderniserkennungssystem von Anfang an kein Alarm ausgelöst. Wird das Fahrzeug jedoch rückwärts bewegt, wird vorsichtshalber vorzugsweise solange Alarm nach Erkennung des Hindernisses im definierten Teilbereich 7 ausgegeben, bis durch die Rückwärtsbewegung des Kraftfahrzeuges festgestellt wird, daß sich der Abstand nicht ändert und somit eine Anhängerkupplung 8 verbaut ist. Erst anschließend wird der Alarm unterdrückt.

Vorsorglich wird ergänzend darauf hingewiesen, daß jede Art von Sensoren, Ultraschall-, Radar- oder Lasersensoren, verwendet werden können und daß der Alarm sowohl akustisch als auch optisch oder haptisch ausgegeben werden kann. Wesentlich ist die Überprüfung der Abstandsänderung bei einer Bewegung des Fahrzeuges nach dem Erkennen eines Hindernisses. Selbstverständlich wird der Alarm des Hinderniserkennungssystems nicht unterdrückt, wenn mehrere Hindernisse erkannt werden und sich nur in Bezug auf ein Hindernis, insbesondere im definierten Teilbereich, der Abstand ändern, insbesondere verkleinern sollte.

Durch dieses erfindungsgemäße Hinderniserkennungssystem wird eine früher unmögliche Verbindung eines PCD-Systems mit einer Anhängerkupplung nunmehr ermöglicht.

## Patentansprüche

1. Hinderniserkennungssystem in einem Kraftfahrzeug mit einem elektronischen Steuergerät und mit Sensoren zur Erfassung des Abstandes eines Hindernisses in einem vorgegebenen Bereich, **dadurch gekennzeichnet, daß** das Steuergerät in einem definierten Teilbereich (7) eines möglicherweise am Fahrzeug (1) angebrachten Anbauteils (8), das von einem Sensor (2 bis 5) als Hindernis erkannt werden könnte, im Falle einer tatsächlichen Hinderniserkennung in diesem Teilbereich (7) in einem ersten Schritt den Abstand des Hindernisses ermittelt und in einem zweiten Schritt überprüft, ob sich dieser Abstand ändert.

2. Hinderniserkennungssystem nach Anspruch 1, **dadurch gekennzeichnet, daß** der üblicherweise in Abhängigkeit vom Abstand des Hindernisses ausgelöste Alarm unterdrückt wird, wenn sich der im definierten Teilbereich (8) erfaßte Abstand des Hindernissen nicht ändert.

## Claims

1. An obstacle recognition system in a motor vehicle with an electronic control device and with sensors for detecting the distance from an obstacle in a specified area, **characterised in that**, in a defined partial area (7) of an attached part (8) possibly mounted on the vehicle (1) that could be recognised as an obstacle by a sensor (2 to 5), the control device determines in a first step the distance from the obstacle in the event of an actual obstacle being recognised in this partial area (7), and in a second step checks whether this distance changes.

2. An obstacle recognition system according to claim 1, **characterised in that** the alarm which is generally triggered as a function of the distance from the obstacle, is suppressed when the distance from the obstacle detected in the defined partial region (8) does not change.

## Revendications

1. Système de reconnaissance d'obstacles dans un véhicule automobile, comprenant un appareil de commande électronique et des capteurs pour détecter la distance d'un obstacle dans une zone prédéterminée,
**caractérisé en ce que**
l'appareil de commande détermine, dans une première étape, la distance d'un obstacle dans une zone partielle définie (7) où un élément de construction (8) peut être monté sur le véhicule (1) et qui pourrait être identifié comme un obstacle par un capteur (2 à 5), dans le cas d'une reconnaissance d'obstacle effective dans cette zone partielle (7) et vérifie dans une seconde étape si cette distance change.

2. Système de reconnaissance d'obstacles selon la revendication 1,
**caractérisé en ce que**
l'alarme généralement déclenchée en fonction de la distance de l'obstacle s'arrête si la distance de l'obstacle détectée dans la zone partielle définie (8) ne change pas.
